# EUROPEAN PATENT APPLICATION

(11) **EP 4 827 126 A1**
(43) Date of publication of application: **21.10.2026**
(21) Application number: 25187297.4
(22) Date of filing: 03.07.2025
(51) Int. Cl.: H04W 4/30

(54) **COMMUNICATION DEVICE AND OPERATING METHOD**

(30) Priority: 14.04.2025 IN 202541035997
(71) Applicant: NXP B.V., 5656 AG Eindhoven (NL)
(72) Inventor: Corbalán Pelegrín, Pablo, 5656AG Eindhoven (NL); Parthasarathi, Srivathsa Masthi, 5656AG Eindhoven (NL)
(74) Representative: Krott, Michel

(57) **Abstract**

In accordance with a first aspect of the present disclosure, a communication device is provided, comprising: an RF communication unit configured to perform UWB communication with an external communication device; a secondary RF communication unit configured to perform RF communication in at least one first radio channel, at least one second radio channel and at least one third radio channel; and a controller configured to cause the secondary RF communication unit to transmit: a first advertising message to the external communication device, said first advertising message being transmitted in the first radio channel and indicating that a second advertising message will be transmitted to the external communication device in the second radio channel; the second advertising message, wherein said second advertising message indicates that periodic advertising messages will be transmitted to the external communication device in the third radio channel; the periodic advertising messages, wherein the periodic advertising messages contain one or more settings for the UWB communication performed by the primary RF communication unit.

## Description

### TECHNICAL FIELD

The present disclosure relates to a communication device. Furthermore, the present disclosure relates to a corresponding method of operating a communication device.

### BACKGROUND

Ultra-wideband (UWB) communication technology is a technology that uses a high signal bandwidth, in particular for transmitting digital data over a wide spectrum of frequency bands. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, i.e., for determining the distance between communicating devices. Therefore, UWB technology may be used to advantage in various applications, such as automotive applications.

### SUMMARY

In accordance with a first aspect of the present disclosure, a communication device is provided, comprising: a primary radio frequency (RF) communication unit configured to perform ultra-wideband (UWB) communication with an external communication device; a secondary RF communication unit configured to perform RF communication in at least one first radio channel, at least one second radio channel and at least one third radio channel; and a controller configured to cause the secondary RF communication unit to transmit: a first advertising message to the external communication device, said first advertising message being transmitted in the first radio channel and indicating that a second advertising message will be transmitted to the external communication device in the second radio channel; the second advertising message, wherein said second advertising message indicates that periodic advertising messages will be transmitted to the external communication device in the third radio channel; the periodic advertising messages, wherein the periodic advertising messages contain one or more settings for the UWB communication performed by the primary RF communication unit.

In one or more embodiments, the periodic advertising messages further contain data indicative of a transmission time of a next UWB message to be transmitted by the primary RF communication unit.

In one or more embodiments, said data contains an offset between the transmission time of the next UWB message and a transmission time of a respective periodic advertising message.

In one or more embodiments, the secondary RF communication unit is configured to perform Bluetooth Low Energy (BLE) communication.

In one or more embodiments, the BLE communication conforms to version 5 of the Bluetooth Core Specification, or to a successor of said version.

In one or more embodiments, the first advertising message is an extended advertising message having a data field that contains data indicating that the second advertising message will be transmitted to the external communication device in the second radio channel.

In one or more embodiments, the second advertising message is an auxiliary extended advertising message having a data field that contains data indicating that the periodic advertising messages will be transmitted to the external communication device in the third radio channel.

In one or more embodiments, the first radio channel operates at a center frequency of 2402 MHz, 2426MHz, or 2480MHz.

In one or more embodiments, the settings for the UWB communication performed by the primary RF communication unit include initialization settings and/or configuration settings.

In one or more embodiments, the controller is a microcontroller.

In accordance with a second aspect of the present disclosure, a method of operating a communication device is conceived, the communication device comprising a controller, a primary radio frequency, RF, communication unit and a secondary RF communication unit, the method comprising: causing, by the controller, the secondary RF communication unit to transmit a first advertising message to an external communication device, said first advertising message being transmitted in at least one first radio channel and indicating that a second advertising message will be transmitted to the external communication device in at least one second radio channel; causing, by the controller, the secondary RF communication unit to transmit the second advertising message, wherein said second advertising message indicates that periodic advertising messages will be transmitted to the external communication device in at least one third radio channel; causing, by the controller, the secondary RF communication unit to transmit the periodic advertising messages, wherein the periodic advertising messages contain one or more settings for performing ultra-wideband, UWB, communication with the external communication device; causing, by the controller, the primary RF communication unit to perform the UWB communication based on said settings.

In one or more embodiments, the periodic advertising messages further contain data indicative of a transmission time of a next UWB message to be transmitted by the primary RF communication unit.

In one or more embodiments, said data contains an offset between the transmission time of the next UWB message and a transmission time of the respective periodic advertising message.

In one or more embodiments, the secondary RF communication unit is configured to perform Bluetooth Low Energy (BLE) communication.

In one or more embodiments, the BLE communication conforms to version 5 of the Bluetooth Core Specification, or to a successor of said version.

### DESCRIPTION OF DRAWINGS

Embodiments will be described in more detail with reference to the appended drawings.
Fig. 1 shows an example of a UWB session initialization.
Fig. 2 shows an example of a Bluetooth Low Energy (BLE) random delay in a legacy advertising scheme.
Fig. 3 shows an illustrative embodiment of a communication device.
Fig. 4 shows an illustrative embodiment of a method of operating a communication device.
Fig. 5A shows another illustrative embodiment of a communication device.
Fig. 5B shows a further illustrative embodiment of a communication device.
Fig. 6 shows an example of a BLE-based periodic advertising scheme.
Fig. 7 shows an advertiser view of a message transmission in accordance with the present disclosure.
Fig. 8 shows a UWB session initialization using periodic advertising in accordance with the present disclosure.

### DESCRIPTION OF EMBODIMENTS

UWB technology is gaining momentum in access applications including fare collection for public transport systems. Similarly, it is envisioned as a technology to handle individual access in buildings with protected areas (e.g., company buildings). A common challenge in these applications is scalability due to the need to handle large number of users, possibly with many of them accessing and therefore using the UWB-based access system simultaneously. This brings significant difficulties due to the need to initialize and configure UWB communication sessions - hereinafter referred to in short as "UWB sessions" - of the many different users and to provide the required service to all of them despite possible coexistence issues, limited radio channels, and other constraints.

Due to the higher power consumption of UWB compared to other technologies, UWB systems tend to rely on a secondary, lower-power radio frequency (RF) communication unit for the initialization and configuration of UWB sessions. An example of such a secondary RF communication unit is a Bluetooth Low Energy (BLE) communication unit. This secondary RF communication unit is typically used in one of two ways: (1) using so-called legacy advertising to share the bare minimum information to start a session, or (2) establishing a BLE connection as described in the document "Digital Key Release 3" , version 1.1.0, of the Car Connectivity Consortium, CCC (published as document CCC-TS-101 on 20 July 2022) and the document "Bluetooth Low Energy Out-of-Band Channel Technical Specification", version 1.0.0, of the FiRa Consortium (published on 31 March 2022). However, BLE connections are one-to-one connections and devices can generally support only up to eight simultaneous connections. Legacy advertising instead exploits random delays that hinder precise UWB synchronization before receiving a first UWB message, yielding long reception windows on UWB controlees so as to properly synchronize. As a result, a typical UWB system that includes a BLE radio as a secondary RF communication unit either supports only a handful of devices simultaneously, or it is not optimized for lower consumption and precise synchronization.

Initial UWB-based transit test deployments typically rely on the above-mentioned first option, i.e., they share a set of minimum information over BLE legacy advertisements. This comes with several limitations as legacy advertisements only leave up to 31B for user data. Besides that, BLE application programming interfaces (APIs) generally set the content of these advertisements fixed, i.e., without the opportunity for the higher-level application to change the content of the data of each advertisement. Finally, legacy advertising uses a mandatory random delay between 0 and 10 µs, which makes it difficult to enable a tight synchronization between the BLE and UWB radios. As a result, the use of legacy advertising may lead to large receiver-enabled windows on the UWB side as the device trying to join the UWB network does not know when the next UWB ranging control message (RCM) or initiation message of the session will be sent.

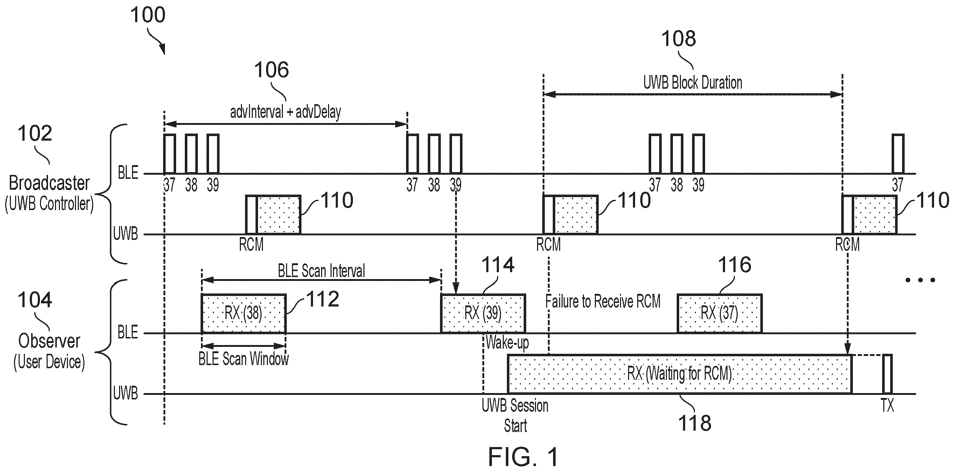

**Fig. 1** shows an example of a UWB session initialization 100. The UWB session initialization 100 is based on BLE legacy advertising. In particular, a secondary RF communication unit of a broadcaster 102 (i.e., a UWB controller) transmits BLE legacy advertising frames through BLE channel numbers 37 (operating at 2402 MHz), 38 (operating at 2426MHz), and 39 (operating at 2480MHz), and which should be received 112, 114, 116 by an observer 104 (i.e., a user device, which may also be referred to as a scanner) during a BLE scan window. Furthermore, a primary RF communication unit of the broadcaster 102 transmits UWB signals 110 containing an RCM. The total elapsing time between the transmission of a sequence of frames through the BLE channels 37, 38 and 39 and the next sequence is the sum 106 of an advertising interval and an advertising delay. The UWB block duration 108 is defined as the time elapsing between consecutive UWB signals 110. During the period 118 the UWB receiver of the observer 104 waits for the next RCM transmitted by the broadcaster 102.

As the BLE advertisements do not include UWB synchronization information, the user UWB radio should turn on its receiver until it successfully receives an RCM. Implementations may then listen for multiple ranging blocks - which typically takes hundreds of milliseconds and might even take several seconds - aiming to receive the RCM. If the message is not received, then the receiver may be turned on again for more blocks until it manages to synchronize. This may significantly increase the power consumption of the UWB radio and it limits the possibility to execute controlee operations in devices which are powered by a coin-cell battery. Furthermore, in more powerful devices in which the UWB antenna may be shared with other wireless technologies, this would also be cumbersome as it would prevent these other technologies access to the shared antenna resource.

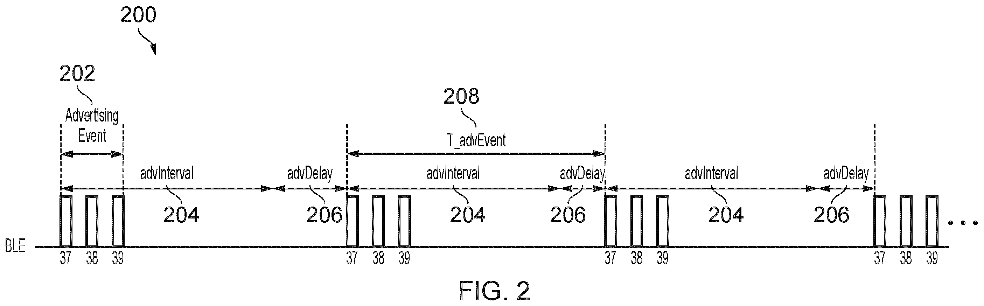

**Fig. 2** shows an example of a BLE random delay 200 in a legacy advertising scheme. During an advertising event 202, multiple BLE legacy advertising frames are transmitted through the BLE channels 37, 38 and 39. As is also shown in Fig. 1, the total elapsing time 208 between the transmission of a sequence of frames and the next sequence (i.e., the sequence of frames of a next advertising event) is the sum of an advertising interval 204 and an advertising delay 206. In BLE legacy advertising schemes, the advertising delay 206 is a random delay. BLE legacy advertising exploits such random delays to prevent continuous collisions. However, this feature together with the limited capabilities to modify the data payload of each individual advertisement prevent implementations from including precise UWB synchronization to avoid the large reception windows shown in Fig. 1.

An alternative to BLE legacy advertising is to establish a BLE connection based on BLE advertising. This connection may then be used to exchange or negotiate the configuration parameters to start the UWB session. The above-mentioned FiRa BLE specification, published as the "Bluetooth Low Energy Out-of-Band Channel Technical Specification", uses this approach. However, it does not include any time synchronization mechanism and therefore the UWB radio may still need to turn on its receiver for a number of blocks until it successfully receives the RCM, wasting precious energy and possibly resulting in a delay to get the UWB session started.

The above-mentioned CCC specification, published as document CCC-TS-101, goes one step further, in the sense that it includes a time synchronization scheme based on the captured timestamp at the connection establishment event. Using this scheme, the reception window may be reduced, yielding a more efficient UWB session start-up. However, this scheme is thought for one-to-one connections and considering the limiting capabilities of most BLE chipsets of establishing up to eight connections simultaneously, this scheme cannot scale for systems such as public transport or building access, in which possibly tens of users may require support from the system at the same time.

Now discussed are a communication device and a corresponding method of operating a communication device, which facilitate setting up UWB sessions between a broadcaster and multiple observers simultaneously.

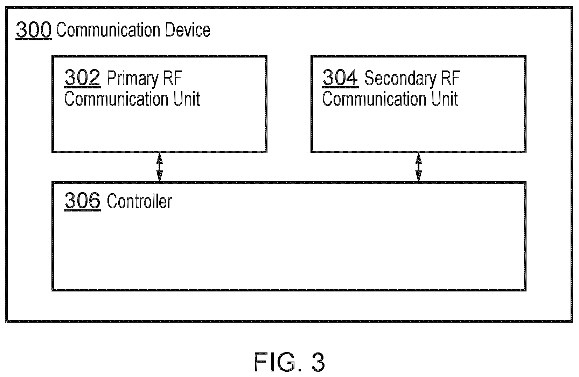

**Fig. 3** shows an illustrative embodiment of a communication device 300. The communication device 300 comprises a primary RF communication unit 302, a secondary RF communication unit 304, and a controller 306. The primary RF communication unit 302 is configured to perform UWB communication with an external communication device (not shown). Furthermore, the secondary RF communication unit 304 is configured to perform RF communication in at least one first radio channel, at least one second radio channel and at least one third radio channel. Furthermore, the controller 306 is configured to cause the secondary RF communication unit 304 to transmit a first advertising message to the external communication device, said first advertising message being transmitted in the first radio channel and indicating that a second advertising message will be transmitted to the external communication device in the second radio channel. In addition, the controller 306 is configured to cause the secondary RF communication unit 304 to transmit the second advertising message, wherein said second advertising message indicates that periodic advertising messages will be transmitted to the external communication device in the third radio channel. Furthermore, the controller 306 is configured to cause the secondary RF communication unit 304 to transmit the periodic advertising messages, wherein the periodic advertising messages contain one or more settings for the UWB communication performed by the primary RF communication unit 302. In this way, UWB sessions may be set up more easily between a broadcaster and multiple observers at the same time. In particular, the presently disclosed communication device 300 may support an unlimited number of users simultaneously. This, in turn, facilitates setting up UWB sessions in large-scale systems, such as public transportation systems and multi-user access applications.

The skilled person will appreciate that the periodic advertising messages do not need to include a random delay as prescribed for example for BLE legacy advertising messages. Furthermore, the periodic advertising messages may be sent as single messages, having a data content that may be configured through common application programming interfaces (APIs), which facilitates the inclusion of UWB-related settings in such messages. It is noted that according to the BLE legacy advertising scheme, three advertisements are transmitted in three different BLE channels 37, 38, and 39, and that all advertisements are sent with the same data, which means that such UWB-related settings cannot be included in them. Furthermore, the skilled person will appreciate that the controller 306 may cause the secondary RF communication unit 304 to transmit the first advertising message, second advertising message and periodic advertising messages in different ways. For example, the controller 306 may be equipped with firmware containing instructions that cause the secondary RF communication unit 304 to transmit said advertising messages.

In one or more embodiments, the periodic advertising messages further contain data indicative of a transmission time of a next UWB message to be transmitted by the primary RF communication unit. In this way, a more precise time synchronization may be achieved, which in turn facilitates avoiding large reception windows for receiving the next UWB signal including the RCM at the observers. In one or more embodiments, said data contains an offset between the transmission time of the next UWB message and a transmission time of a respective periodic advertising message. This practical implementation further facilitates achieving a more precise time synchronization.

In one or more embodiments, the secondary RF communication unit is configured to perform BLE communication. The BLE communication protocol is particularly suitable for setting up the aforementioned periodic advertising scheme. Furthermore, in one or more embodiments, the BLE communication conforms to version 5 of the Bluetooth Core Specification, or to a successor of said version. This further facilitates setting up the aforementioned periodic advertising scheme. For example, the BLE communication may conform to the "Bluetooth Core Specification", version 6.0, published by the Bluetooth Special Interest Group (SIG) on 27 August 2024, which is incorporated herein by reference.

In a practical implementation, the first advertising message is an extended advertising message having a data field that contains data indicating that the second advertising message will be transmitted to the external communication device in the second radio channel. More specifically, the first advertising message may be implemented as an ADV_EXT_IND message, according to the Bluetooth Core Specification version 6.0. Furthermore, the data contained in the data field may for example contain information regarding which second radio channel will be used for transmitting the second advertising message (e.g., at which frequency the message will be transmitted), information regarding which physical layer (PHY) will be used by the second advertising message (e.g., 1M PHY, 2M PHY, or 1M Coded PHY), and information regarding when the second advertising message will be presented on the second radio channel.

In a practical implementation, the second advertising message is an auxiliary extended advertising message having a data field that contains data indicating that the periodic advertising messages will be transmitted to the external communication device in the third radio channel. More specifically, the second advertising message may be implemented as an AUX_ADV_IND message, according to the Bluetooth Core Specification version 6.0. Furthermore, the data contained in the data field may for example contain the offset time of the first one of the periodic advertising messages, relative to the transmission of the second advertising message, and the interval between the consecutive periodic advertising messages.

In one or more embodiments, the first radio channel operates at a center frequency of 2402 MHz, 2426MHz, or 2480MHz. In this way, a practical implementation is realized. For example, in case BLE-based advertising is applied, the first advertising message is sent through the three designated primary BLE channels 37, 38, and 39, having the respective center frequencies of 2402 MHz, 2426MHz and 2480MHz. In one or more embodiments, the settings for the UWB communication performed by the primary RF communication unit include initialization settings and/or configuration settings. This further facilitates setting up the aforementioned UWB sessions. Furthermore, in a practical implementation, the controller is a microcontroller.

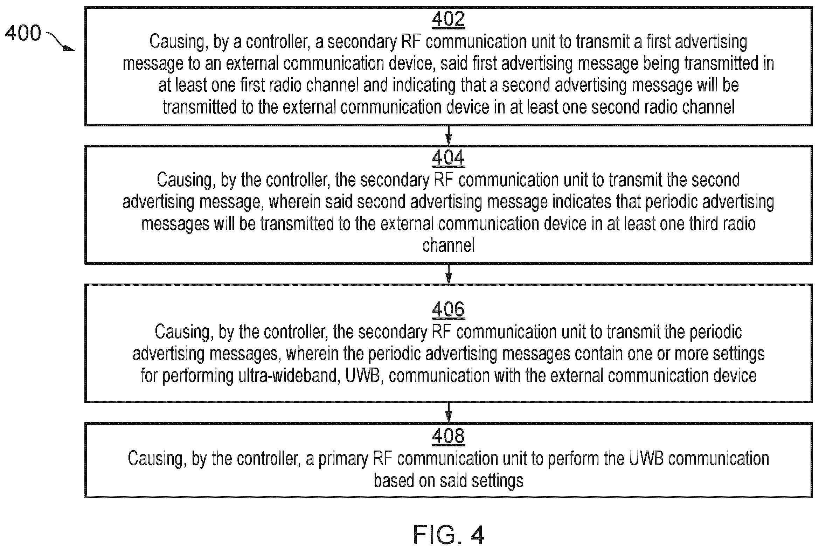

**Fig. 4** shows an illustrative embodiment of a method 400 of operating a communication device. The method 400 includes the following steps. At 402, a controller of the communication device causes a secondary RF communication unit of the communication device to transmit a first advertising message to an external communication device, said first advertising message being transmitted in at least one first radio channel and indicating that a second advertising message will be transmitted to the external communication device in at least one second radio channel. Furthermore, at 404, the controller causes the secondary RF communication unit to transmit the second advertising message, wherein said second advertising message indicates that periodic advertising messages will be transmitted to the external communication device in at least one third radio channel. Furthermore, at 406, the controller causes the secondary RF communication unit to transmit the periodic advertising messages, wherein the periodic advertising messages contain one or more settings for performing UWB communication with the external communication device. Finally, at 408, the controller causes a primary RF communication unit of the communication device to perform the UWB communication based on said settings. As mentioned above with reference to the corresponding communication device shown in Fig. 3, in this way, UWB sessions may be set up more easily between a broadcaster and multiple observers at the same time.

It is noted that, in case a BLE-based periodic advertising scheme is used, the presently disclosed method may be implemented as follows. The first advertising message, i.e., the initial advertisement ADV_EXT_IND, is sent across three first radio channels, i.e., primary advertising channels 37, 38 and 39. In this way, it may be ensured that a scanner receives the first advertising message, because scanners typically listen in one channel at a time (i.e., in a scanning window). Then, the second advertising message AUX_ADV_IND is sent in a second radio channel, i.e., a so-called secondary advertising channel. It is noted that consecutive second advertising messages may be sent in different second radio channels; BLE has many secondary advertising channels and a channel map and associated function may be used to determine in which secondary advertising channel a respective second advertising message AUX_ADV_IND will be sent. Finally, the periodic advertising message AUX_SYNC_IND is sent in the third radio channel, which is yet another secondary advertising channel. Again, it is noted that consecutive periodic advertising messages may be sent in different third radio channels; a channel map and associated function may be used to determine in which secondary advertising channel a respective periodic advertising message AUX_SYNC_IND will be sent.

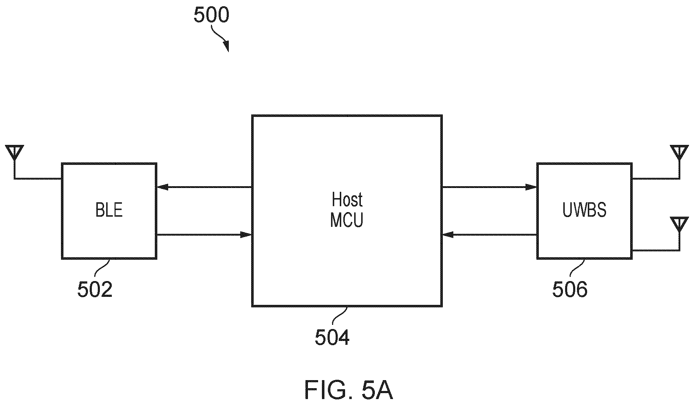

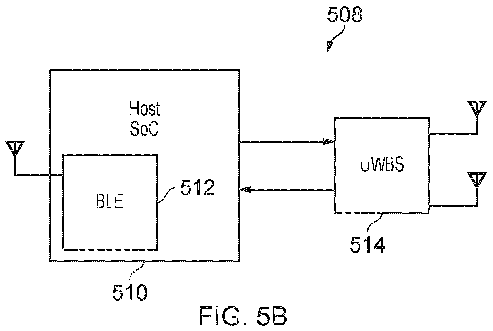

**Figs. 5A** **and** **5B** show further illustrative embodiments of a communication device 500, 508. In particular, Fig. 5A shows a first simplified device system architecture, in which the primary RF communication unit is implemented as a UWB subsystem (UWBS) 506, the secondary RF communication unit is implemented as a BLE communication unit 502, and the controller is implemented as a host microcontroller (MCU) 504. Furthermore, Fig. 5B shows a second simplified system device architecture, in which the primary RF communication unit is implemented as a UWBS 514, the secondary RF communication unit is implemented as a BLE communication unit 512 integrated into a host system-on-chip (SoC) 510, and the controller is implemented as an MCU (not shown) integrated into the same host system-on-chip (SoC) 510 that contains the BLE communication unit 512. Figs. 5A and 5B represent non-limiting examples of how the presently disclosed communication device may be implemented. It is noted that other example implementations may include a BLE communication unit, UWBS, and MCU in a single SoC, or an SoC including an MCU and UWBS connected to a separate BLE communication unit.

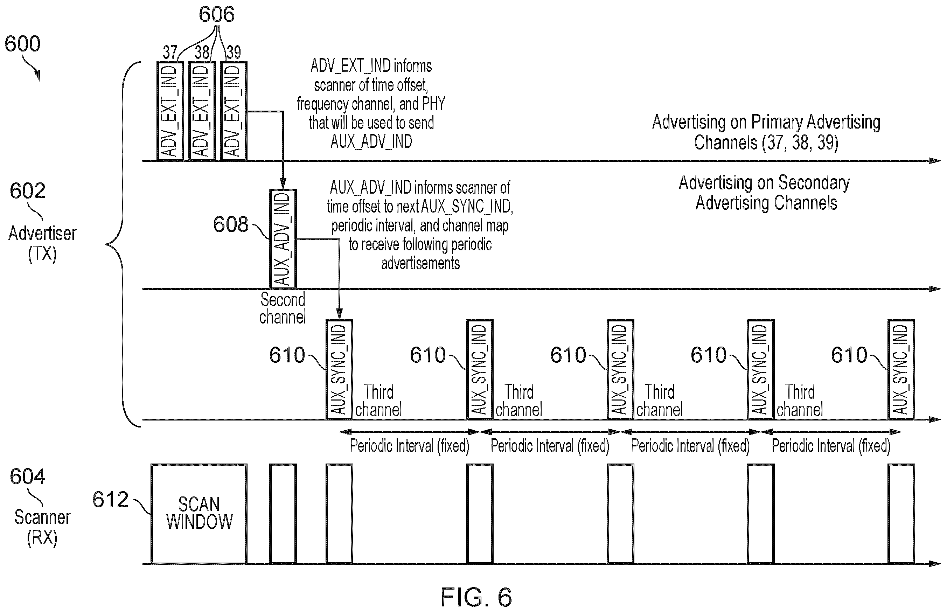

**Fig. 6** shows an example of a BLE-based periodic advertising scheme 600. According to this scheme, an advertiser 602 transmits first advertising message 606 (ADV_EXT_IND) across three first radio channels, i.e., the primary advertising channels 37, 38 and 39. The scanner 604 listens in these primary advertising channels 37, 38 and 39 one channel at a time, during a scan window 612. The first advertising message 606 informs the scanner 604 of the time offset, frequency channel, and PHY that will be used to send the second advertising message 608 (AUX_ADV_IND). The second advertising message 608, which is sent across a second radio channel (i.e., a secondary advertising channel), informs the scanner 604 of the time offset to the first periodic advertising message 610 (AUX_SYNC_IND), a periodic interval, and a channel map to receive subsequent periodic advertising messages 610. These periodic advertising messages 610 are sent across different third radio channels (i.e., multiple, mutually different secondary advertising channels) according to the information given in the channel map.

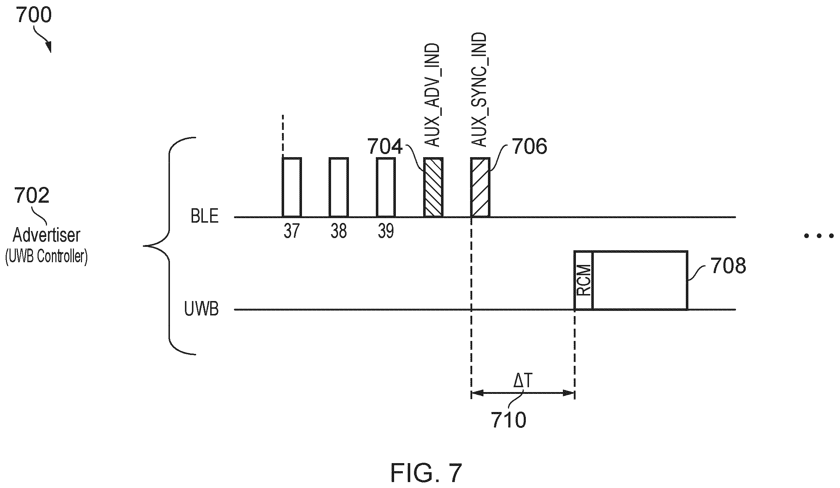

**Fig. 7** shows an advertiser view of a message transmission 700 in accordance with the present disclosure. In particular, it is shown how an advertiser 702 transmits multiple extended advertising messages in the primary BLE channels 37, 38 and 39, followed by an auxiliary extended advertising message 704 (AUX_ADV_IND), and a follow-up periodic advertising message 706 (AUX_SYNC_IND), which are transmitted in a second BLE channel. This periodic advertising message 706 contains data indicative of a time offset 710 between the transmission of the periodic advertising message 706 and the transmission of the next UWB message, i.e., the next UWB signal including an RCM 708. In particular, in order to synchronize the UWB sessions using BLE, the advertiser device extracts the next UWB RCM transmission timestamp and compares it against the periodic event timestamp. This time offset 710 (Δt) informs the receiving device about when the next UWB RCM will be transmitted relative to the periodic event and enables the observer to precisely turn on the UWB receiver when the RCM is transmitted, thereby reducing energy consumption and therefore optimizing the initialization scheme.

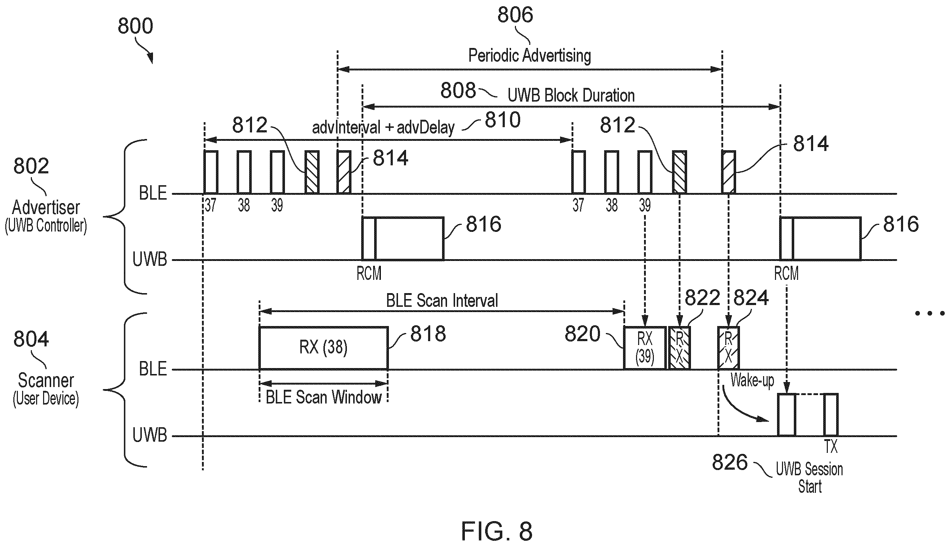

**Fig. 8** shows a UWB session initialization 800 using periodic advertising in accordance with the present disclosure. In particular, a complete UWB initialization scheme is shown, which applies BLE-based periodic advertising. The scheme starts with advertising across the primary advertising channels, which are the BLE channels that observers use to discover BLE services. Upon receiving a BLE extended advertising message, the observer listens to the following auxiliary extended advertising message 812 (AUX_ADV_IND) in a different radio channel. This auxiliary extended advertising message 812 points the receiver to the next advertising transmission performed in yet another radio channel, i.e., to the periodic advertising message 814 (AUX_SYNC_IND), which in turn includes the necessary information to configure the UWB session(s) as well as the time offset to the next RCM transmission for precise synchronization.

Compared to alternative approaches, the presently disclosed communication device may enable an unlimited number of users to obtain the necessary session configuration while obtaining precise time synchronization to reduce the reception window to first listen to the UWB controller RCM. This energy consumption reduction may have several advantages, including the possibility to enable controlee functionality in coin-cell operated devices.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: UWB session initialization
- 102: broadcaster (UWB controller)
- 104: observer (user device)
- 106: advertising interval + advertising delay
- 108: UWB block duration
- 110: UWB signal including ranging control message (RCM)
- 112: reception of advertising frame 38
- 114: reception of advertising frame 39
- 116: reception of advertising frame 37
- 118: UWB receiver waiting for RCM
- 200: BLE random delay in legacy advertising
- 202: advertising event
- 204: advertising interval
- 206: advertising delay
- 208: time elapsing until next advertising event
- 300: communication device
- 302: primary RF communication unit
- 304: secondary RF communication unit
- 306: controller
- 400: method of operating a communication device
- 402: causing, by a controller, a secondary RF communication unit to transmit a first advertising message to an external communication device, said first advertising message being transmitted in at least one first radio channel and indicating that a second advertising message will be transmitted to the external communication device in at least one second radio channel
- 404: causing, by the controller, the secondary RF communication unit to transmit the second advertising message, wherein said second advertising message indicates that periodic advertising messages will be transmitted to the external communication device in at least one third radio channel
- 406: causing, by the controller, the secondary RF communication unit to transmit the periodic advertising messages, wherein the periodic advertising messages contain one or more settings for performing ultra-wideband, UWB, communication with the external communication device
- 408: causing, by the controller, a primary RF communication unit to perform the UWB communication based on said settings
- 500: communication device
- 502: BLE communication unit
- 504: host microcontroller (MCU)
- 506: UWB subsystem (UWBS)
- 508: communication device
- 510: host system-on-chip (SoC)
- 512: BLE communication unit
- 514: UWBS
- 600: BLE-based periodic advertising scheme
- 602: advertiser (TX)
- 604: scanner (RX)
- 606: ADV_EXT_IND
- 608: AUX_ADV_IND
- 610: AUX_SYNC_IND
- 612: scan window
- 700: advertiser view of a message transmission
- 702: advertiser (UWB controller)
- 704: AUX_ADV_IND
- 706: AUX_SYNC_IND
- 708: UWB signal including RCM
- 710: time offset
- 800: UWB session initialization using periodic advertising
- 802: advertiser (UWB controller)
- 804: scanner (user device)
- 806: periodic advertising
- 808: UWB block duration
- 810: advertising interval + advertising delay
- 812: AUX_ADV_IND
- 814: AUX_SYNC_IND
- 816: UWB signal including RCM
- 818: reception of advertising frame 38
- 820: reception of advertising frame 39
- 822: reception of AUX_ADV_IND
- 824: reception of AUX_SYNC_IND
- 826: UWB session start

## Claims

1. A communication device, comprising:
a primary radio frequency, RF, communication unit configured to perform ultra-wideband, UWB, communication with an external communication device;
a secondary RF communication unit configured to perform RF communication in at least one first radio channel, at least one second radio channel and at least one third radio channel; and
a controller configured to cause the secondary RF communication unit to transmit:
a first advertising message to the external communication device, said first advertising message being transmitted in the first radio channel and indicating that a second advertising message will be transmitted to the external communication device in the second radio channel;
the second advertising message, wherein said second advertising message indicates that periodic advertising messages will be transmitted to the external communication device in the third radio channel;
the periodic advertising messages, wherein the periodic advertising messages contain one or more settings for the UWB communication performed by the primary RF communication unit.

2. The communication device of claim 1, wherein the periodic advertising messages further contain data indicative of a transmission time of a next UWB message to be transmitted by the primary RF communication unit.

3. The communication device of claim 2, wherein said data contains an offset between the transmission time of the next UWB message and a transmission time of a respective periodic advertising message.

4. The communication device of any preceding claim, wherein the secondary RF communication unit is configured to perform Bluetooth Low Energy, BLE, communication.

5. The communication device of claim 4, wherein the BLE communication conforms to version 5 of the Bluetooth Core Specification, or to a successor of said version.

6. The communication device of claim 5, wherein the first advertising message is an extended advertising message having a data field that contains data indicating that the second advertising message will be transmitted to the external communication device in the second radio channel.

7. The communication device of claim 5 or 6, wherein the second advertising message is an auxiliary extended advertising message having a data field that contains data indicating that the periodic advertising messages will be transmitted to the external communication device in the third radio channel.

8. The communication device of any preceding claim, wherein the first radio channel operates at a center frequency of 2402 MHz, 2426MHz, or 2480MHz.

9. The communication device of any preceding claim, wherein the settings for the UWB communication performed by the primary RF communication unit include initialization settings and/or configuration settings.

10. The communication device of any preceding claim, wherein the controller is a microcontroller.

11. A method of operating a communication device, the communication device comprising a controller, a primary radio frequency, RF, communication unit and a secondary RF communication unit, the method comprising:
causing, by the controller, the secondary RF communication unit to transmit a first advertising message to an external communication device, said first advertising message being transmitted in at least one first radio channel and indicating that a second advertising message will be transmitted to the external communication device in at least one second radio channel;
causing, by the controller, the secondary RF communication unit to transmit the second advertising message, wherein said second advertising message indicates that periodic advertising messages will be transmitted to the external communication device in at least one third radio channel;
causing, by the controller, the secondary RF communication unit to transmit the periodic advertising messages, wherein the periodic advertising messages contain one or more settings for performing ultra-wideband, UWB, communication with the external communication device;
causing, by the controller, the primary RF communication unit to perform the UWB communication based on said settings.

12. The method of claim 11, wherein the periodic advertising messages further contain data indicative of a transmission time of a next UWB message to be transmitted by the primary RF communication unit.

13. The method of claim 12, wherein said data contains an offset between the transmission time of the next UWB message and a transmission time of the respective periodic advertising message.

14. The method of any one of claims 11 to 13, wherein the secondary RF communication unit is configured to perform Bluetooth Low Energy, BLE, communication.

15. The method of claim 14, wherein the BLE communication conforms to version 5 of the Bluetooth Core Specification, or to a successor of said version.

## Amended claims

### Amended claims in accordance with Rule 137(2) EPC.

1. A communication device (300), comprising:
a primary radio frequency, RF, communication unit (302) configured to perform ultra-wideband, UWB, communication with an external communication device;
a secondary RF communication unit (304) configured to perform RF communication in at least one first radio channel, at least one second radio channel and at least one third radio channel, wherein the secondary RF communication unit (304) is configured to perform Bluetooth Low Energy, BLE, communication;
**characterized by** a controller (306) configured to cause the secondary RF communication unit (304) to transmit:
a first advertising message to the external communication device, said first advertising message being transmitted in the first radio channel and indicating that a second advertising message will be transmitted to the external communication device in the second radio channel;
the second advertising message, wherein said second advertising message indicates that periodic advertising messages will be transmitted to the external communication device in the third radio channel;
the periodic advertising messages, wherein the periodic advertising messages contain one or more settings for the UWB communication performed by the primary RF communication unit (302).

2. The communication device (300) of claim 1, wherein the periodic advertising messages further contain data indicative of a transmission time of a next UWB message to be transmitted by the primary RF communication unit (302).

3. The communication device (300) of claim 2, wherein said data contains an offset between the transmission time of the next UWB message and a transmission time of a respective periodic advertising message.

4. The communication device (300) of any preceding claim, wherein the BLE communication conforms to version 5 of the Bluetooth Core Specification, or to a successor of said version.

5. The communication device (300) of claim 4, wherein the first advertising message is an extended advertising message having a data field that contains data indicating that the second advertising message will be transmitted to the external communication device in the second radio channel.

6. The communication device (300) of claim 4 or 5, wherein the second advertising message is an auxiliary extended advertising message having a data field that contains data indicating that the periodic advertising messages will be transmitted to the external communication device in the third radio channel.

7. The communication device (300) of any preceding claim, wherein the first radio channel operates at a center frequency of 2402 MHz, 2426MHz, or 2480MHz.

8. The communication device (300) of any preceding claim, wherein the settings for the UWB communication performed by the primary RF communication (302) unit include initialization settings and/or configuration settings.

9. The communication device (300) of any preceding claim, wherein the controller (306) is a microcontroller.

10. A method (400) of operating a communication device, the communication device comprising a controller, a primary radio frequency, RF, communication unit and a secondary RF communication unit configured to perform Bluetooth Low Energy, BLE, communication, the method comprising:
causing (402), by the controller, the secondary RF communication unit to transmit a first advertising message to an external communication device, said first advertising message being transmitted in at least one first radio channel and indicating that a second advertising message will be transmitted to the external communication device in at least one second radio channel;
causing (404), by the controller, the secondary RF communication unit to transmit the second advertising message, wherein said second advertising message indicates that periodic advertising messages will be transmitted to the external communication device in at least one third radio channel;
causing (406), by the controller, the secondary RF communication unit to transmit the periodic advertising messages, wherein the periodic advertising messages contain one or more settings for performing ultra-wideband, UWB, communication with the external communication device;
causing (408), by the controller, the primary RF communication unit to perform the UWB communication based on said settings.

11. The method (400) of claim 10, wherein the periodic advertising messages further contain data indicative of a transmission time of a next UWB message to be transmitted by the primary RF communication unit.

12. The method (400) of claim **11,** wherein said data contains an offset between the transmission time of the next UWB message and a transmission time of the respective periodic advertising message.

13. The method (400) of any one of claims 10 to 12, wherein the BLE communication conforms to version 5 of the Bluetooth Core Specification, or to a successor of said version.
